Europäisches Patentamt

European Patent Office

Office européen des brevets

(11) Publication number: **0 052 958**
**A2**

# (12) EUROPEAN PATENT APPLICATION

(21) Application number: **81305190.1**

(22) Date of filing: **30.10.81**

(51) Int. Cl.³: **C 08 G 18/67**
**C 08 G 18/10, C 08 L 75/08**
**C 08 G 18/32, C 08 F 283/00**

(30) Priority: **03.11.80 US 203213**

(43) Date of publication of application:
**02.06.82 Bulletin 82/22**

(84) Designated Contracting States:
**BE DE FR GB IT NL SE**

(71) Applicant: **OLIN CORPORATION**
**275 South Winchester Avenue**
**New Haven, Connecticut 06511(US)**

(72) Inventor: **O'Connor, James Michael**
**8 Kenilworth Drive**
**Clinton Connecticut 06413(US)**

(72) Inventor: **Lickei, Donald Lee**
**38 Hallmark Drive**
**Wallingford Connecticut 06492(US)**

(72) Inventor: **Rosin, Michael Lee**
**77 Twilight Drive**
**Madison Connecticut 06443(US)**

(74) Representative: **Thomas, Roger Tamlyn et al,**
**D. Young & Co. 10 Staple Inn**
**London WC1V 7RD(GB)**

(54) Modified polyurethane liquid polymer compositions and their preparation.

(57) A novel heat-curable liquid polymer composition comprises a modified urethane oligomer containing terminal ethylenic unsaturation and a free radical catalyst. It is prepared by heating a mixture of the oligomer and the catalyst. In a preferred embodiment, the polymer composition further includes a reinforcing agent and/or a filler; the cured composition demonstrates enhanced impact properties and is particularly useful in automotive body constructions.

The urethane oligomer has an equivalent ratio of NCO to OH from 0.5:1 to 2:1 and has been prepared by reacting

(a) an isocyanate-terminated prepolymer having a final free NCO content ranging from 0.5% to 30% and that is the product of reacting an organic polyisocyanate with an isocyanate-reactive-group-containing unsaturated acrylate and/or unsaturated amide monomer, with

(b) a polyol having an average equivalent weight in the range 75 to 500 and an average functionality of at least about 3.

EP 0 052 958 A2

## MODIFIED POLYURETHANE LIQUID POLYMER COMPOSITIONS AND THEIR PREPARATION

This invention relates to urethane oligomer systems, more particularly liquid polymer compositions containing a modified urethane oligomer having terminal ethylenic unsaturation.

The use of plastics materials for exterior components in automotive construction has been steadily increasing over recent years. Fuel economy requirements are continuing to dictate vehicular weight reduction, which portends even more extensive utilization of plastics.

In the area of rigid plastics automotive components, fiberglass-reinforced thermosetting polyesters have found widespread application. These polyester resin formulations have been favorably accepted due to their overall physical capabilities (e.g., dimensional stability, strength, high temperature resistance, and paint adhesion). Facility of handling and machining also has fostered favor. However, these polyester systems are still beset by certain deficiencies. The brittle nature that is characteristic of polyester compounds and composites can lead to severe impact and fatigue problems. Surface smoothness and shrinkage control have also presented formidable difficulties.

Various additives have been suggested for introduction into polyester sheet molding compounds (SMC) and bulk molding compounds (BMC) to relieve shrinkage and surface problems or to improve impact resistance. The addition of liquid polymers, such as polybutadiene (e.g., U.S. Patent No. 4,020, 036) has been taught to serve well in regard to toughening polyester products; but, due to incompatibility, storage of such pre-mixes is difficult. Saturated diacids or long-chain glycols also have been used to prepare polyester resins; the resulting polyester products are more flexible but have poorer mechanical and thermal properties.

An approach relating to the introduction of urethane chemicals to a polyester resin system is described in U.S. Patent No. 4,062,826. Here, precursors of a cross-linked polyurethane are polymerized within a mixture of ethylenically unsaturated polyester and vinyl monomer to form a product with an interpenetrating polyurethane gel network within the polyester cross-linked structure. However, while higher impact strengths are reported, the fine surface finish required for automotive body part applications is still not accomplished. (G. Forger, "Toughened SMC", Plastics World, page 63, June, 1978).

The present invention results from the unexpected discovery that a heat-curable liquid polymer composition can be prepared comprising a modified urethane oligomer containing terminal ethylenic unsaturation and a free-radical catalyst. The present invention provides a polyurethane liquid polymer composition comprising a urethane oligomer and a heat-activated free-radical-generating catalyst, characterized in that the urethane oligomer has an equivalent ratio of NCO to OH from 0.5:1 to 2:1 and has been prepared by reacting

(a)      an isocyanate-terminated prepolymer having a final free NCO content ranging from 0.5% to 30% and that is the product of reacting an organic polyisocyanate with an isocyanate-reactive-group-containing unsaturated acrylate and/or unsaturated amide monomer, with

(b)      a polyol having an average equivalent weight in the range 75 to 500 and an average functionality of at least about 3.

Compositions can be made in accordance with the invention that have the advantages of a one-component storage-stable system that requires only heat for activation; the cured composition is useful in preparing a wide variety of coatings and castings.

In a particularly preferred form of the invention, the polymer composition may include at least one additional component that is a reinforcing agent and/or a filler. The cured plastics products feature improved impact properties and are suitable for many of the same utilities as thermoset polyester resin compositions, such as parts for automotive bodies.

The polyurethane oligomer utilized according to the invention is prepared by first reacting an organic polyisocyanate with an isocyanate-reactive-group-containing unsaturated monomer using standard procedures and in such proportions as to yield an isocyanate-terminated prepolymer of controlled molecular weight having a free NCO content ranging from about 0.5% to about 30%. Preferably, the prepolymer has a free NCO content ranging from about 10% to about 20%. Suitable reactive-group-containing unsaturated monomers include unsaturated acrylates and unsaturated amides such as hydroxyethyl acrylate, hydroxypropyl acrylate, hydroxyethyl methacrylate, hydroxyethyl acrylamide, t-butylaminoethyl methacrylate and N-(isobutoxymethyl) acrylamide.

The organic polyisocyanates used in the polyurethane prepolymer formation include toluene diisocyanate, such as the 80:20 or the 65:35 isomer mixture of the 2,4- and 2,6-isomeric forms, ethylene diisocyanate, propylene diisocyanate, methylene-bis-(4-phenyl isocyanate), xylene diisocyanate, 3,3'-bitoluene-4,4'-diisocyanate, hexamethylene diisocyanate, naphthalene 1,5-diisocyanate, and the polymeric isocyanates such as polyphenylene polymethylene isocyanate, and mixtures thereof. Toluene diisocyanate is preferred.

To form the polyurethane oligomer that is utilized according to the invention, the prepared isocyanate-terminated prepolymer, as defined above, is then reacted with a polyol. The reaction is carried out using methods well known in the art and such relative proportions of the reactants as to achieve an oligomer product having an equivalent ratio of NCO to OH from about 0.5:1 to about 2:1, preferably 0.7:1 to 1.5:1, and most particularly 0.8:1 to 1.2:1. In a preferred procedure, the reaction is accelerated by a catalyst; common urethane catalysts, e.g., tertiary amines and metal compounds such as stannous octoate and dibutyltin dilaurate, may be used. By reaction of the isocyanate-terminated prepolymer with the polyol, a controlled molecular weight urethane oligomer with terminal reactive unsaturation is produced. Preferably, the reaction is carried out in the presence of a reactive copolymerizable solvent.

4

Suitable copolymerizable solvents include vinylidene compounds such as styrene, vinyl toluene, methacrylic esters, acrylic esters and divinyl benzene, which are familiar to those skilled in the art. The amount of copolymerizable solvent may be varied over a wide range. Generally, however, the amount of copolymerizable solvent is up to about 100 parts by weight per 100 parts by weight of the urethane oligomer of the present invention.

The polyol reactant used in the urethane oligomer formation is selected from polyether polyols and mixtures of two or more such compounds. The polyol, or mixtures of polyols, should have an average equivalent weight ranging from about 75 to about 500. Preferably, the average equivalent weight is about 100 to about 200. The average functionality of the polyol or polyol blend is at least about 3, and preferably 3 to 8.

Suitable polyether polyols include various polyoxyalkylene polyols and mixtures thereof. These can be prepared, according to well-known methods, by condensing an alkylene oxide, or a mixture of alkylene oxides using random or step-wise addition, with a polyhydric initiator or a mixture of polyhydric initiators. Illustrative alkylene oxides include ethylene oxide, propylene oxide, butylene oxide, amylene oxide, aralkylene oxides such as styrene oxide, and the halogenated alkylene oxides such as trichlorobutylene oxide and so forth. The most preferred alkylene oxide is propylene oxide or a mixture thereof with ethylene oxide using random or step-wise oxyalkylation.

The polyhydric initiator used in preparing the polyether polyol reactant includes the following and mixtures thereof: (a) the aliphatic triols such as glycerol, trimethylolpropane, triethylolpropane, trimethylolhexane, and the like; and (b) higher functionality alcohols such as sucrose, dextrose, sorbitol, pentaerythritol, methyl glucoside, and the like.

A preferred group of polyhydric initiators for use in preparing the polyether polyol reactant is one which comprises mixtures of sucrose or dextrose with an aliphatic triol, preferably glycerol.

The alkylene oxide-polyhydric initiator condensation reaction is preferably carried out in the presence of a catalyst such as KOH as is well known in the art. In effecting the reaction, a sufficient proportion of alkylene oxide is used, so as to provide a final polyol product having an average equivalent weight of about 75 to about 500, preferably about 100 to about 200. The catalyst is thereafter preferably removed, leaving a polyether polyol which is ready for use in preparing the urethane oligomer of the invention.

The modified urethane oligomer liquid polymer system is polymerized and cured in the presence of a heat-activated free-radical-generating catalyst. The actual curing temperature is dependent on the particular catalyst employed. Suitable free radical catalysts include peroxide or azo type compounds, known to those in the art. Typical peroxide catalysts are illustrated by organo peroxides and hydroperoxides such as benzoyl peroxide, dicumyl peroxide, methyl ethyl ketone peroxide, lauryl peroxide, cyclohexanone peroxide, t-butyl perbenzoate, t-butyl hydroperoxide, t-butylbenzene hydroperoxide, cumene hydroperoxide, t-butyl peroctoate and the like. Typical azo compounds are azobis-isobutyronitrile, 2-t-butylazo-2-cyano-4-methylpentane, and 4-t-butylazo-4-cyano-valeric acid. The preferred catalysts are peroxide catalysts. In particular, preferred peroxide catalysts are t-butyl peroctoate, t-butyl perbenzoate, and mixtures thereof. Any suitable catalytic amount may be employed; however, the catalyst generally is used in an amount from about 0.1 to about 10 parts by weight per 100 parts by weight of the oligomer.

In forming the urethane oligomer, it is also preferred to include chain extenders, well known to those in the polyurethane art, in the reaction mixture. These chain extenders include low molecular weight glycols such as ethylene glycol, butane diol, hexane diol, propylene glycol, bisphenol A, and the like. Other suitable chain extenders are polyether polyols, or mixture of polyols, having an average equivalent weight ranging from about 400 to about 4,000 and an average functionality of about 2. The amount of chain extender employed can vary broadly depending upon the amount of polyol reactant used in preparing the polyurethane oligomer.

The composition of the present invention may also contain other standard ingredients, if desired, such as fillers (e.g., finely divided solids including $CaCO_3$, clay alumina, talc, glass microspheres, and the like) and reinforcement materials (e.g., chopped fiberglass, carbon fibers, asbestos fibers, boron nitride whiskers, and the like). Other ingredients may include internal mold release agents, such as calcium, zinc, magnesium, or sodium stearate. Pigments, dyes, stabilizers, viscosity modifiers (e.g., Group II metal oxides and hydroxides, such as magnesium oxide) and various additives familiar to those skilled in thermosetting polyester technology also may be added. Other low shrink or impact additives also may be included, if desired. A typical formulation generally contains, per 100 parts by weight of the polyurethane oligomer, reinforcement materials in an amount ranging from about 10 to about 150 parts by weight and from about 20 to about 400 parts by weight of fillers.

The following examples are provided to further illustrate the invention. All parts are by weight unless otherwise specified.

Preparation of Polyurethane Oligomer

EXAMPLE 1

To 87.0 grams (1.0 eq.) of diisocyanate, 141.8 grams of styrene and 0.71 grams of hydroquinone was added dropwise with stirring 65.0 grams (0.5 eq.) of unsaturated monomer over a period of 30 minutes. The reaction temperature rose from 25° to 30°C, and the mixture was stirred without heating for 60 minutes. To this mixture was added dropwise with stirring a mixture of 36.7 grams (0.25 eq.) of a polyether polyol and 24.0 grams (0.25 eq.) of a chain extender over a period of 45 minutes. The resulting mixture was stirred for 45 minutes without heating, when 0.68 ml of dibutyltin dilaurate was added. The reaction temperature climbed from 33° to 65°C within five minutes. The mixture was then heated to 70°C and was stirred at 70°C for 3 hours. The product had a viscosity of 1,130 mPa.s at 26°C.

The polyether polyol used had a molecular weight of about 650 and was prepared by condensing a dextrose/ glycerol mixture with propylene oxide to a final hydroxyl number of about 375. The diisocyanate was a mixture of toluene diisocyanate isomers (80:20 mixture of 2,4/2,6-isomers). The chain extender was tripropylene glycol. The unsaturated monomer was hydroxypropyl acrylate.

EXAMPLES 2-26

Additional polyurethane oligomers were prepared employing the same conditions as outlined in Example I. Different reactants and proportions of reactants were used, however, to form prepolymers. These prepolymers were reacted with suitable proportion of polyol to produce oligomers according to the invention. Table I outlines the oligomer compositions prepared according to Examples 2-26.

TABLE I

OLIGOMER COMPOSITIONS

| Example | Diisoycanate ① (eq.) | Unsaturated Monomer (eq.) | | Polyol (eq.) | | Chain Extender (eq.) | | | |
|---|---|---|---|---|---|---|---|---|---|
| | | A ② | B ③ | C ④ | D ⑤ | E ⑥ | F ⑦ | G ⑧ | H ⑨ |
| 1 | 1.0 | --- | 0.5 | 0.25 | --- | --- | --- | 0.25 | --- |
| 2 ⑩ | 1.0 | 0.5 | --- | 0.25 | --- | --- | --- | 0.25 | --- |
| 3 | 2.0 | 1.0 | --- | 0.75 | --- | 0.25 | --- | --- | --- |
| 4 | 2.0 | 1.0 | --- | 0.5 | --- | 0.5 | --- | --- | --- |
| 5 | 2.0 | 1.0 | --- | --- | 0.5 | 0.5 | --- | --- | --- |
| 6 | 2.0 | --- | 1.0 | --- | 1.0 | --- | --- | --- | --- |
| 7 | 2.0 | --- | 1.0 | 1.0 | --- | --- | --- | --- | --- |
| 8 | 2.0 | --- | 1.0 | --- | 0.5 | 0.5 | --- | --- | --- |
| 9 | 2.0 | --- | 1.0 | 0.5 | --- | 0.5 | --- | --- | --- |
| 10 | 2.0 | --- | 1.0 | --- | 0.5 | 0.5 | --- | --- | --- |
| 11 | 2.0 | --- | 1.0 | --- | 0.5 | --- | 0.5 | --- | --- |
| 12 | 2.0 | --- | 1.0 | 0.75 | --- | 0.25 | --- | --- | --- |
| 13 | 2.0 | --- | 1.0 | --- | 0.75 | 0.25 | --- | --- | --- |
| 14 | 2.0 | 1.0 | --- | --- | 0.5 | --- | 0.5 | --- | --- |

- 10 -

0052958

TABLE I (Continued)

OLIGOMER COMPOSITIONS

| Example | Diisocyanate (1) (eq.) | Unsaturated Monomer (eq.) | | Polyol (eq.) | | Chain Extender (eq.) | | | |
|---|---|---|---|---|---|---|---|---|---|
| | | A (2) | B (3) | C (4) | D (5) | E (6) | F (7) | G (8) | H (9) |
| 15 | 2.0 | 1.0 | --- | 0.5 | --- | --- | 0.5 | --- | --- |
| 16 | 2.0 | 1.0 | --- | 0.75 | --- | --- | --- | --- | 0.25 |
| 17 | 2.0 | 1.0 | --- | --- | 0.75 | --- | --- | --- | 0.25 |
| 18 | 2.0 | 1.0 | --- | --- | 0.75 | 0.25 | --- | --- | --- |
| 19 | 2.0 | --- | 1.0 | 0.50 | --- | --- | 0.5 | --- | --- |
| 20 | 2.0 | --- | 1.0 | 0.50 | --- | --- | --- | 0.5 | --- |
| 21 | 2.0 | --- | 1.0 | --- | 0.75 | --- | --- | 0.25 | --- |
| 22 | 2.0 | --- | 1.0 | 0.75 | --- | --- | --- | 0.25 | --- |
| 23 | 2.0 | --- | 1.0 | --- | 0.50 | --- | --- | 0.5 | --- |
| 24 | 2.0 | 1.0 | --- | --- | 0.50 | --- | --- | 0.5 | --- |
| 25 | 2.0 | 1.0 | --- | 0.5 | --- | --- | --- | 0.5 | --- |
| 26 | 2.0 | 1.0 | --- | 0.75 | --- | --- | --- | 0.25 | --- |

- 11 -

0052958

TABLE I (Continued)

OLIGOMER COMPOSITIONS

(1) The diisocyanate is a mixture of toluene diisocyanate isomers (80:20 mixture of 2,4/2,6-isomers).

(2) Hydroxyethyl acrylate.

(3) Hydroxypropyl acrylate.

(4) A polyether polyol having a molecular weight of about 650 and prepared by condensing a dextrose/glycerol mixture with propylene oxide to a final hydroxyl number of about 375.

(5) A polyether polyol having a molecular weight of about 480 and prepared by condensing a sucrose/glycerol mixture with propylene oxide to a final hydroxyl number of about 530.

(6) 2-Ethyl-1,3-hexane diol.

(7) Dipropylene glycol.

(8) Tripropylene glycol.

(9) A polyether polyol having a molecular weight of about 650 and prepared by end-capping a propoxylated dipropylene glycol precursor with ethylene oxide to a final hydroxyl number of about 173.

(10) Instead of 141.8, 137.1 grams of styrene were used.

## EXAMPLE 27

To 174 grams (2.0 eq.) of diisocyanate and 291.5 grams of styrene was added dropwise with stirring 132 grams (1.0 eq.) of unsaturated monomer over a period of 1 hour. The mixture was stirred without heating for 1 hour, after which 131.25 grams (1.25 eq.) of a polyether polyol was added over a period of 1 hour. The resulting mixture was stirred for 1 hour without heating, when 0.2 ml of dibutyltin dilaurate was added. The mixture was then heated to 70°C and was stirred at 70°C for 3 hours.

The polyether polyol used had a molecular weight of about 480 and was prepared by condensing a sucrose/glycerol mixture with propylene oxide to a final hydroxyl number of about 530. The diisocyanate was a mixture of toluene diisocyanate isomers (80:20 mixture of 2,4/2,6-isomers). The unsaturated monomer was hydroxypropyl acrylate.

## EXAMPLE 28

To 174 grams (2.0 eq.) of diisocyanate and 271.5 grams of styrene was added dropwise with stirring 132 grams (1.0 eq.) of unsaturated monomer over a period of 1 hour. The mixture was stirred without heating for 1 hour. To this mixture was added dropwise with stirring a mixture of 55.6 grams (0.625 eq.) of a polyether polyol and 45.6 grams (0.625 eq.) of a chain extender over a period of 1 hour. The resulting mixture was stirred for 1 hour without heating, when 0.2 ml of dibutyltin dilaurate was added. The mixture was then heated to 70°C and was stirred at 70°C for 3 hours.

The polyether polyol used had a molecular weight of about 480 and was prepared by condensing a sucrose/ glycerol mixture with propylene oxide to a final hydroxyl number of about 530. The diisocyanate was a mixture of toluene diisocyanate isomers (80:20 mixture of 2,4/2,6-isomers). The chain extender was 2-ethyl-1,3-hexanediol. The unsaturated monomer was hydroxypropyl acrylate.

EXAMPLE 29

A.    To 348 grams (4.0 eq.) of diisocyanate was added dropwise with stirring 232 grams (2.0 eq.) of unsaturated monomer over a period of 105 minutes. The reaction temperature was maintained below 50°C during the addition period by external cooling with a cooled water bath. The mixture was stirred for one additional hour below 35°C. At the end of this period, 387 grams of styrene was added to the mixture. No unsaturated monomer was detected in the sample after standing overnight.

B.    To a mixture of 26.3 grams (0.25 eq.) of a polyether polyol and 18.3 grams (0.25 eq.) of a chain extender in 29.7 grams of styrene was added 242 grams (0.50 eq.) of the intermediate from part A dropwise over a period of 30 minutes. After stirring for one hour at room temperature, 0.5 ml of stannous octoate was added. The reaction temperature climbed to 50°C after 20 minutes. The mixture was stirred for an additional 40 minutes after the peak exotherm was reached, at which point 50 mg of hydroquinone was added and the mixture was heated to 75°C. The mixture was stirred at 75°C for two hours. At the end of the heating period, no isocyanate peak was observed in an infrared spectrum. The product had a viscosity of 2,960 mPa.s at 22°C.

The diisocyanate was a mixture of toluene diisocyanate isomers (80:20 mixture of 2,4/2,6-isomers). The unsaturated monomer was hydroxyethyl acrylate. The polyether polyol used had a molecular weight of about 480 and was prepared by condensing a sucrose/glycerol mixture with propylene oxide to a final hydroxyl number of about 530. The chain extender was 2-ethyl-1,3-hexanediol.

## EXAMPLE 30

A.    To 539.4 grams (6.2 eq.) of diisocyanate was added dropwise with stirring 403 grams (3.1 eq.) of unsaturated monomer over a period of 2½ hours. The reaction temperature was maintained below 40°C during the addition period by external cooling with a cooled water bath. The mixture was stirred for three additional hours below 40°C. At the end of this period, 628 grams of styrene was added to the mixture. No unsaturated monomer was detected in the sample after standing overnight.

B.    To 52.5 grams (0.50 eq.) of a polyether polyol and 0.5 ml of stannous octoate in 35.0 grams of styrene was added dropwise 253.5 grams of the intermediate from part A over a period of one hour. After stirring for 30 minutes at room temperature, 50 mg of hydroquinone was added and the mixture was heated to 75°C. The mixture was stirred at 75°C for four hours, at which time an infrared spectrum of a sample of the mixture showed no isocyanate absorption. The product had a viscosity of 2,320 mPa.s to 27°C.

The diisocyanate was a mixture of toluene diisocyanate isomers (80:20 mixture of 2,4/2,6-isomers). The unsaturated monomer was hydroxypropyl acrylate. The polyether polyol used had a molecular weight of about 480 and was prepared by condensing a sucrose/glycerol mixture with propylene oxide to a final hydroxyl number of about 530.

Preparation of Urethane Moldings

EXAMPLES 31-48

Test panels were prepared containing varying amounts of polyurethane oligomer prepared according to Examples 3-21. The urethane molding formulations used in this work is listed in Table II below. The following procedure was followed in the preparation of the cured composites.

a. Into a high shear mixing device were added the urethane oligomer, styrene, other monomers, catalyst and pigments.

b. The filler was added gradually and mixed until a homogeneous paste was obtained.

c. Next chopped fiberglass was gradually added to the paste in a two-roll mill (or Baker Perkins mixer or Ross Double Planetary mixer) and the mix was worked the minimal length of time to achieve good wet out of the glass without significant breakdown.

d. The uncured mix was then placed in a mold between the platens of a compression molding machine and cured under pressure (about 14 MPa) for three minutes at 149-163°C.

Alternatively to (d), the mixture may be added by a hopper device to the screw system of an injection molding device to produce an injection molded part, or the mix may be made up on an SMC machine for later compression or injection molding.

The physical properties of panels prepared in this manner are included in Table III below. The physical properties were determined in accordance with standard test procedures: Flexural modulus and flexural strength — ASTM D790; tensile strength — ASTM D3574; izod — ASTM D256; and coefficient of thermal expansion — ASTM D696.

18

The data in Tables III and IV below are as measured. In view of the provisions of Rule 35 (12) of the Implementing Regulations, certain of the data are repeated in metric units in Tables IIIA and IVA, which correspond to Tables III and IV respectively and which follow Table IV.

TABLE II

URETHANE MOLDING FORMULATION (SMC/BMC)

| Component | Parts by Weight | |
|---|---|---|
| Polyurethane Oligomer | 100 | (40% Styrene) |
| Tertiary Butyl Perbenzoate | 0.5 | |
| Tertiary Butyl Peroctoate ① | 0.5 | |
| Zinc Stearate | 3.0 | |
| Calcium Carbonate | 185 | |
| ½ Inch (1.27 cm) Glass | 75 | |

① Commercially available from Lupersol Co. under the designation PDO, understood to consist of 50% tertiary butyl peroctoate and 50% dioctyl phthalate.

TABLE III

PHYSICAL PROPERTIES OF CURED URETHANE OLIGOMERS

| Example | Oligomer | Tensile Strength (psi) | Flex. Strength (psi) | Flex. Modulus X $10^6$ (psi) | Izod (ft.-lb./in.) | | Surface [1] (1 - 10) | Gloss [2] (%) |
|---------|----------|------------------------|----------------------|------------------------------|--------------------|-----------|----------------------|---------------|
| | | | | | Notched | Unnotched | | |
| 31 | Example 3 | 6240 | 10,100 | 0.870 | 12.5 | 13.6 | 5.5 | 70 |
| 32 | Example 4 | 6320 | 14,400 | 1.04 | 16.1 | 17.4 | 5.0 | 60 |
| 33 | Example 20 | 3140 | 12,000 | 1.30 | 9.1 | 16.1 | 6.0 | 65 |
| 34 | Example 5 | 4310 | 12,800 | 0.900 | 8.4 | 17.0 | 4.5 | 60 |
| 35 | Example 15 | 2910 | 9,700 | 1.30 | 11.0 | 10.0 | 7.5 | 75 |
| 36 | Example 14 | 3690 | 13,200 | 1.46 | 12.6 | 12.2 | 6.5 | 70 |
| 37 | Example 18 | 4900 | 16,200 | 1.23 | 9.5 | 9.3 | 5.0 | 50 |
| 38 | Example 19 | 3930 | 15,600 | 1.52 | 11.7 | 12.7 | 5.5 | 65 |
| 39 | Example 7 | 4440 | 11,200 | 0.874 | 11.7 | 14.8 | 5.0 | 60 |

TABLE III (Continued)

PHYSICAL PROPERTIES OF CURED URETHANE OLIGOMERS

| Example | Oligomer | Tensile Strength (psi) | Flex. Strength (psi) | Flex. Modulus X $10^6$ (psi) | Izod (ft.-lb./in.) | | Surface [1] (1 - 10) | Gloss [2] (%) |
|---|---|---|---|---|---|---|---|---|
| | | | | | Notched | Unnotched | | |
| 40 | Example 12 | 3930 | 11,200 | 1.48 | 8.2 | 13.6 | 7.0 | 70 |
| 41 | Example 9 | 6140 | 12,800 | 1.20 | 9.6 | 10.6 | 5.0 | 50 |
| 42 | Example 6 | 3140 | 7,800 | 0.621 | 9.1 | 12.9 | 7.5 | 85 |
| 43 | Example 13 | 4400 | 10,500 | 1.15 | 10.2 | 11.3 | 7.5 | 85 |
| 44 | Example 8 | 6160 | 11,000 | 0.98 | 9.0 | 12.0 | 5.0 | 75 |
| 45 | Example 21 | 5200 | 15,200 | 1.34 | 9.7 | 12.8 | 5.5 | 60 |
| 46 | Example 11 | 3810 | 13,400 | 1.35 | 11.0 | 13.4 | 5.5 | 60 |
| 47 | Example 10 | 5680 | 13,600 | 1.19 | 12.4 | 10.4 | 7.0 | 85 |
| 48 | Example 27 | ---- | 17,300 | 1.53 | 9.3 | 14.9 | ---- | -- |

[1] The surface is rated subjectively from 1-10, 10 having the smoothness of glass while 1 is a fairly rough and uneven surface.

[2] Gloss is a subjective value.

0052958

Preparation of Urethane Moldings

EXAMPLES 49-60

Test panels were prepared containing varying amounts of polyurethane oligomer prepared according to Examples 3, 4, 7, 8, 12-15 and 18-21. The following procedure was followed in the preparation of the cured panels.

a. The polyurethane oligomer was mixed with the free radical generating catalyst, and the resulting mixture was degassed by placement in a vacuum desiccator at 1-10 torr (133-1333 Pa) pressure for a period of approximately 1-2 minutes or until initial foaming subsides.

b. The degassed mixture was poured into a mold formed by glass plates coated with a liquid mold release agent, such as MR515 commercially available from Greenchem Products, Inc., and held apart by 0.16 cm spacers.

c. The mold was then placed under conditions appropriate for curing, and after completion of the curing cycle, the panels were demolded and tested.

The physical properties of panels prepared in this manner are included in Table IV below. The physical properties were determined in accordance with standard test procedures: Flexural modulus and flexural strength — ASTM D790; tensile strength — ASTM D3574; izod — ASTM D256; and coefficient of thermal expansion — ASTM D696.

TABLE IV

PHYSICAL PROPERTIES OF CURED URETHANE OLIGOMERS

| Example ① | Oligomer | Tensile Strength (psi) | Flex. Strength (psi) | Flex. Modulus X 10⁶(psi) | Izod (ft.-lb./in.) | |
|---|---|---|---|---|---|---|
| | | | | | Notched | Unnotched |
| 49 | Example 3 | 5690 | 12,700 | 0.526 | 1.59 | 4.00 |
| 50 | Example 4 | 5380 | 17,000 | 0.541 | 1.69 | 3.20 |
| 51 | Example 7 | 7430 | 16,300 | 0.511 | 1.69 | 4.30 |
| 52 | Example 8 | 5840 | 13,000 | 0.540 | 1.86 | 4.00 |
| 53 | Example 12 | 6280 | 16,400 | 0.495 | 1.73 | 4.50 |
| 54 | Example 13 | 6310 | 18,600 | 0.567 | 1.54 | 4.37 |
| 55 | Example 14 | 4670 | 13,600 | 0.535 | 1.80 | 3.75 |
| 56 | Example 15 | 5060 | 16,200 | 0.525 | 2.00 | 4.00 |
| 57 | Example 18 | 9910 | 13,200 | 0.414 | 1.87 | 4.95 |
| 58 | Example 19 | 8500 | 14,700 | 0.461 | 1.71 | 4.47 |
| 59 | Example 20 | 6880 | 17,300 | 0.529 | 1.60 | 4.43 |
| 60 | Example 21 | 7600 | 18,300 | 0.546 | 1.84 | 4.22 |

① - see note after Table IVA

## TABLE IIIA

### PHYSICAL PROPERTIES OF CURED URETHANE OLIGOMERS

| Example | Oligomer of Example | Tensile Strength (MPa) | Flex. Strength (MPa) | Flex. Modulus (GPa) | Izod (J/m.) | |
|---|---|---|---|---|---|---|
| | | | | | Notched | Unnotched |
| 31 | 3 | 43.0 | 69.6 | 6.0 | 667 | 726 |
| 32 | 4 | 43.6 | 99.3 | 7.17 | 859 | 928 |
| 33 | 20 | 21.7 | 82.7 | 8.96 | 485 | 859 |
| 34 | 5 | 29.7 | 88.3 | 6.2 | 448 | 907 |
| 35 | 15 | 20.1 | 66.9 | 8.96 | 587 | 534 |
| 36 | 14 | 25.4 | 91.0 | 10.1 | 672 | 651 |
| 37 | 18 | 33.8 | 111.7 | 8.48 | 507 | 496 |
| 38 | 19 | 27.1 | 107.6 | 10.5 | 624 | 678 |
| 39 | 7 | 30.1 | 77.2 | 6.02 | 624 | 790 |
| 40 | 12 | 27.0 | 77.2 | 10.20 | 437 | 726 |
| 41 | 9 | 42.3 | 88.2 | 8.28 | 512 | 566 |
| 42 | 6 | 21.6 | 53.8 | 4.28 | 485 | 688 |
| 43 | 13 | 30.3 | 72.4 | 7.92 | 544 | 603 |
| 44 | 8 | 42.5 | 75.8 | 6.76 | 480 | 640 |
| 45 | 21 | 35.8 | 104.8 | 9.24 | 517 | 68ᶻ |
| 46 | 11 | 26.3 | 92.4 | 9.31 | 587 | 715 |
| 47 | 10 | 39.2 | 93.8 | 8.20 | 662 | 555 |
| 48 | 27 | — | 119.3 | 10.55 | 496 | 795 |

24

## TABLE IVA

## PHYSICAL PROPERTIES OF CURED URETHANE OLIGOMERS

| Example[1] | Oligomer of Example | Tensile Strength (MPa) | Flex. Strength (MPa) | Flex. Modulus (GPa) | Izod (J/m.) | |
|---|---|---|---|---|---|---|
| | | | | | Notched | Unnotched |
| 49 | 3 | 39.2 | 88 | 3.63 | 84.9 | 214 |
| 50 | 4 | 37.1 | 118 | 3.73 | 90.2 | 171 |
| 51 | 7 | 51.2 | 112 | 3.52 | 90.2 | 230 |
| 52 | 8 | 40.3 | 90 | 3.72 | 99.3 | 214 |
| 53 | 12 | 43.3 | 113 | 3.41 | 92.3 | 240 |
| 54 | 13 | 43.5 | 128 | 3.91 | 82.2 | 233 |
| 55 | 14 | 32.2 | 94 | 3.69 | 96.1 | 200 |
| 56 | 15 | 34.9 | 112 | 3.62 | 106.8 | 214 |
| 57 | 18 | 68.3 | 91 | 2.85 | 99.8 | 264 |
| 58 | 19 | 58.6 | 101 | 3.18 | 91.3 | 239 |
| 59 | 20 | 47.4 | 119 | 3.65 | 88.4 | 236 |
| 60 | 21 | 52.4 | 126 | 3.76 | 98.2 | 225 |

[1] Panels prepared using 0.5% tertiary butyl peroctoate (commerically available from Lupersol Co. under the designation PDO, understood to consist of 50% tertiary butyl peroctoate and 50% dioctyl phthalate) and 0.5% tertiary butyl perbenzoate as initiator, and cured at 120°C for a period of 1 hour.

CLAIMS

1.    A polyurethane liquid polymer composition comprising a urethane oligomer and a heat-activated free-radical-generating catalyst, characterized in that the urethane oligomer has an equivalent ratio of NCO to OH from 0.5:1 to 2:1 and has been prepared by reacting

(a)    an isocyanate-terminated prepolymer having a final free NCO content ranging from 0.5% to 30% and that is the product of reacting an organic polyisocyanate with an isocyanate-reactive-group-containing unsaturated acrylate and/or unsaturated amide monomer, with

(b)    a polyol having an average equivalent weight in the range 75 to 500 and an average functionality of at least about 3.

2.  ·    A composition according to Claim 1, including at least one reinforcing agent and/or at least one filler.

3.    A composition according to Claim 2, in which from 20 to 400 parts by weight of filler is included per 100 parts by weight of urethane oligomer.

4. ·    A composition according to Claim 2 or 3, in which from 10 to 150 parts by weight of reinforcing agent is included per 100 parts by weight of urethane oligomer.

5.    A composition according to any one of Claims 1 to 4, including a copolymerizable solvent, preferably styrene.

6.    A composition according to any one of Claims 1 to 5, in which the urethane oligomer has an equivalent ratio of NCO to OH from 0.7:1 to 1.5:1.

7.    A composition according to Claim 6, in which the isocyanate-terminated prepolymer has a final free NCO content ranging from 10% to 20%, and the urethane oligomer has an equivalent ratio of NCO to OH from 0.8:1 to 1.2:1.

8. A composition according to any one of Claims 1 to 7, in which the unsaturated monomer is hydroxyethyl acrylate, hydroxypropyl acrylate, hydroxyethyl methacrylate, hydroxyethyl acrylamide, t-butylaminoethyl methacrylate or N-(isobutoxymethyl) acrylamide.

9. A composition according to any one of Claims 1 to 8, in which the catalyst is a peroxide catalyst, preferably t-butyl perbenzoate or t-butyl peroctoate or a mixture thereof.

10. A composition according to Claim 1, in which the polyol has an average equivalent weight in the range 100 to 200 and has been prepared by reacting (a) a mixture of sucrose and/or dextrose with an aliphatic triol with (b) propylene oxide or a mixture of propylene oxide with ethylene oxide.

11. A composition according to any one of Claims 1 to 10, in which urethane oligomer further comprises a chain-extending agent, preferably 2-ethyl-1,3-hexane diol, dipropylene glycol or tripropylene glycol.

12. A composition according to any one of Claims 1 to 11, in which the said organic polyisocyanate is toluene diisocyanate.

13. A process for preparing a polyurethane polymer product comprising mixing a urethane oligomer and a heat-activated free-radical-generating catalyst, and then heating the resulting mixture at a temperature adequate to activate the catalyst and cure the mixture, the urethane oligomer having an equivalent ratio of NCO to OH from 0.5:1 to 2:1 and having been prepared in the manner defined in Claim 1.

14. A process according to Claim 13, in which the polyol has an average equivalent weight in the range 100 to 200, the isocyanate-terminated prepolymer has a final free NCO content in the range 10% to 20%, and the urethane oligomer has an equivalent ratio of NCO to OH in the range 0.8:1 to 1.2:1.

15.    A process according to Claim 13 or 14, in which the urethane oligomer further comprises a chain-extending agent.

16.    A process according to Claims 13, 14 or 15, in which the urethane oligomer and the said catalyst are also mixed with a reinforcing agent and/or a filler to a homogeneous blend before the mixture is heated to cure it.